**Europäisches Patentamt**

**European Patent Office**

**Office européen des brevets**

(19)

(11) Veröffentlichungsnummer : **0 207 042 B2**

(12) **NEUE EUROPÄISCHE PATENTSCHRIFT**

(45) Veröffentlichungstag der neuen Patentschrift :
**01.04.92 Patentblatt 92/14**

(21) Anmeldenummer : **86870082.4**

(22) Anmeldetag : **10.06.86**

(51) Int. Cl.⁵ : **E21B 43/08,** E03B 3/12,
E03B 3/18

(54) **Verfahren zur sandfreien Entnahme von Wasser aus einem Brunnen sowie eine hierzu geeignete Vorrichtung.**

(30) Priorität : **12.06.85 BE 215172**

(43) Veröffentlichungstag der Anmeldung :
**30.12.86 Patentblatt 86/52**

(45) Bekanntmachung des Hinweises auf die
Patenterteilung :
**15.03.89 Patentblatt 89/11**

(45) Bekanntmachung des Hinweises auf die
Entscheidung über den Einspruch :
**01.04.92 Patentblatt 92/14**

(84) Benannte Vertragsstaaten :
**AT BE CH DE FR GB IT LI LU NL SE**

(56) Entgegenhaltungen :
**DE-A- 2 401 327**

(56) Entgegenhaltungen :
**DE-A- 3 005 604**
**"Wassererschliessung, Grundlagen der Erkundung, Bewirtschaftung und Erschliessung von Grundwasservorkommen in Theorie und Praxis", 3. Auflage, Essen 1973, S.768, Kapitel 7.4.2.3.1.3.**

(73) Patentinhaber : **Kabelwerk Eupen AG Câblerie d'Eupen SA Kabelfabriek Eupen NV**
**Malmedyer Strasse 9**
**B-4700 Eupen (BE)**

(72) Erfinder : **Pelzer, Rudolf**
**Auf der Pief 37**
**W-5120 Herzogenrath (DE)**

(74) Vertreter : **Overath, Philippe et al**
**Cabinet Bede 13, Avenue Antoine Depage**
**B-1050 Bruxelles (BE)**

EP 0 207 042 B2

Jouve, 18, rue Saint-Denis, 75001 PARIS

EP 0 207 042 B2

## Beschreibung

Die Erfindung betrifft eine Vorrichtung zur sandfreien Entnahme von Wasser aus einem konventionell ausgebauten Bohr brunnen gemäß dem Oberbegriff des Anspruchs 1.

Eine bekannte Vorrichtung Entnahme von Wasser verwendet ein gleichmäßig mit Öffnungen versehenes vertikales Doppelrohr, über welches mit einer Tauchpumpe (oder sonstige Entnahmevorrichtung) Wasser angesaugt wird. Diese Vorrichtung ermoglicht jedoch nur eine geringere Entnahmekapazität, wenn verlangt wird, daß das entnommene Wasser sandfrei sein soll, d.h., wenn aus der umliegenden wasserführrenden Schicht stammende Sandpartikel oberhalb einer kritischen Korngröße nicht mit angesaugt werden sollen.

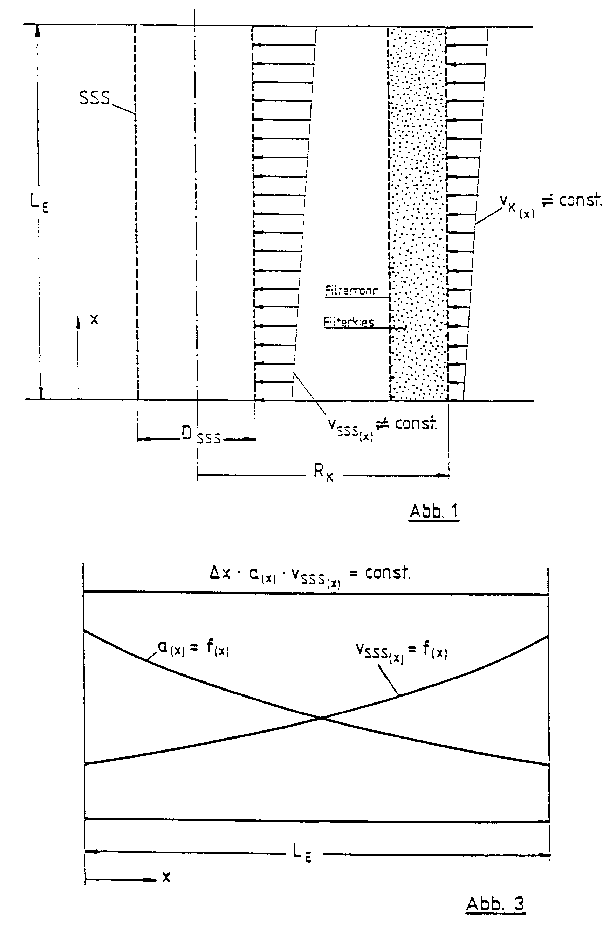

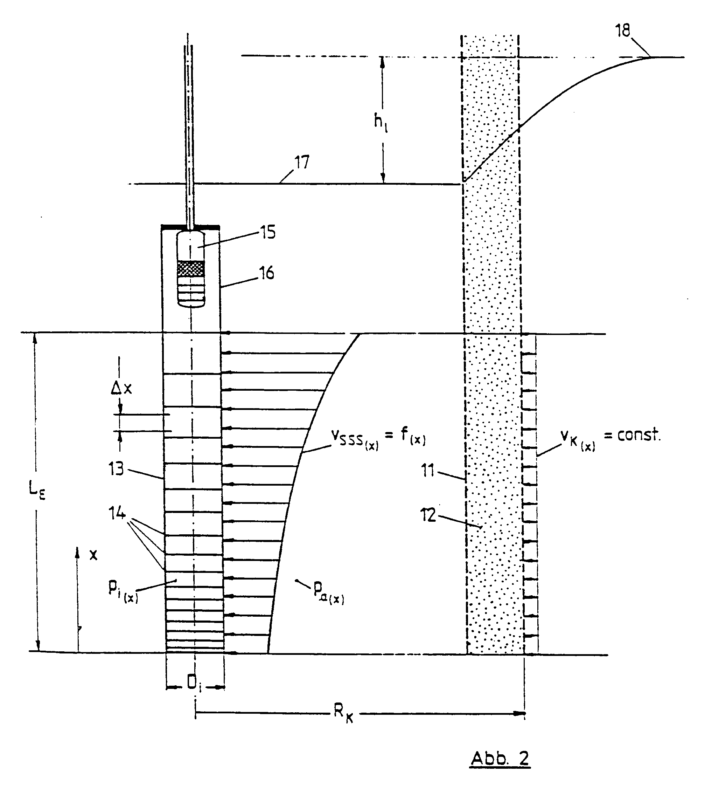

Diese Vorrichtung, die sogenannte Saugstromsteuerung (SSS), ist aus der DE-2401 3274 bekannt. Danach besteht das sogenannte Steuerelement des SSS aus zwei über der variablen Länge gleichmäßig transversal geschlitzten, koaxial angeordneten Rohren unterschiedlichen Durchmessers, wobei der hohlzylindrische Raum zwischen den beiden Rohren mit feinkörnigem Granulat verfüllt ist. Durch diesen Aufbau soll erreicht werden, daß die horizontale Zuströmgeschwindigkeit an der kritischen Stelle $R_K$ (Abb. 1) über der gesamten wirksamen vertikalen Länge des Steuerelementes, der sogenannten Einzugslänge $L_E$, in etwa konstant ist. Wie Messungen zeigen, läßt sich eine über der gesamten Einzugslänge gleichmäßige horizontale Zuströmgeschwindigkeit mit dem aus der DE-A-24 01 327 bekannten Steuerelement nicht erreichen. Gegenüber einer gleichmäßigen Zuströmgeschwindigkeit an der kristischen Stelle $R_K$ (Abb. 2) über der Einzugslänge des Steuerelementes hat dies zur Folge, daß bei einer bestimmten Fördermenge noch ein gewisses Quantum an feinkörnigen Sandpartikeln mitgeschleppt und damit angesaugt wird.

Es ist daher Aufgabe der Erfindung, bei einer bestimmten Fördermenge eine Vorrichtung zur sandfreien Entnahme von Wasser aus einem Brunnen gemäß dem Oberbegriff des Anspruches 1 zu schaffen und dabei gleichzeitig den Energieverbrauch im Vergleich zur herkömmlichen Wasserförderung ohne SSS infolge einer noch geringeren Grundwasserabsenkung im Brunnenbereich weiter zu reduzieren.

Diese Aufgabe wird durch die kennzeichnenden Merkmale des Anspruchs 1 gelöst. Vorteilhafte Weiterbildungen ergeben sich aus den Unteransprüchen.

Die erfindungsgemäß vorgesehene Ausbildung führt zu dem besonderen Vorteil, daß daß durch jedes Teilstück $\Delta x$ der Einzugslänge $L_E$ die gleiche Teilwassermenge $\Delta\dot{V}$ radial in die SSS einströmt und sich folglich für eine bestimmte Fördermenge an der Stelle $R_K$ (Abb. 2) ein über der Einzugslänge gleichmäßiges Strömungsprofil ergibt und damit keine Sandpartikel oberhalb der kristischen Korngröße angesaugt werden Strömungstechnisch ist dies damit zu er erklären, daß das radiale Druckgefälle über der SSS-Wandung von oben nach unten hin definiert abnimmt, d.h. somit auch die diesem Druckgefälle proportionale Strömungsgeschwindigkeit in den Wasserdurchtrittsflächen von oben nach unten hin entsprechend kleiner wird. Darüber hinaus ist die erforderliche Antriebsleistung für die verwendete Pumpe geringer als bei der herkömmlichen SSS gemäß DE-A-24 01 327 da die mittlere Zuströmgeschwindigkeit in der wasserführenden Schicht geringer ist und das Steuerelement aus beispielweise einem transversal geschlitzten, dünnwandigen Rohrmaterial mit großmöglichem Durchmesser besteht, das daher keinen nennenswerten Druckverlust in radialer Richtung über der Wandung erzeugt.

Ein absolut gleichmäßiges Strömungsprofil an der Stelle $R_K$ (Abb. 2) würde sich theoretisch dann ergeben, wenn die relative Wasserdurchtrittsfläche von oben nach unten in infinitesimal kleinen Stufen definiert wachsen würde, Die einzige Möglichkeit dieser kontinuierlichen Schlitzflächenzunahme von oben nach unten wäre theoretisch nur durch einen durchgehenden oder in Abschnitten tangential versetzten Longitudinalschlitz zu erreichen, der in der Breite in definierter Weise stetig von oben nach unten zunimmt. Sowohl diese, als auch eine in infinitesimal kleinen Stufen durchgeführte Transversalschlitzung ist aus fertigungstechnischen Gründen mit vertretbarem Aufwand kaum zu realisien.

Bereits in "Die Wasserverschließung" 3. Auflage von Prof Dr. rer. nat. Hans Schneider, Vulkan-Verlag Essen 1973, S. 768 wird darauf hingewiesen, daß man einen gleichmäßigen Wasserzufluß auf der ganzen Filterlänge nur mit einem durch das Filter hindurchgehenden Saugsohr erreichen könnte, das auf der ganzen Filterlänge der Fordermenge augepaßte Löcher habe, die von oben nach unter inder Zahl oder dem Durchmesser entsprechend zunehmen würden. Da das aher praktisch kaum durchführbar sei, wird vorgeschlagen, die zulässige Wasserzutrittsgeschwindigkeit $V_i$ kleiner als die größtmögliche $V_O$ anzunehmen.

In praktischen Feldversuchen zeigte sich jedoch, daß mit einer in endlichen kleinen Stufen zunehmenden relativen Wasserdurchtrittsfläche ein über der Einzugslänge gleichmäßiges Strömungsprofil an der Stelle $R_K$ zu erreichen ist. Es läßt sich denken, daß die Länge $\Delta x$ der einzelnen Stufen beliebig klein gewählt werden kann und nur vom fertigungstechnischen Aufwand begrenzt wird. In jedem Falle stellt die Stufenlänge $\Delta x$ einen sehr kleinen Wert im Verhältnis zur Gesamteinzugslänge $L_E$ dar.

Besonders vorteilhaft ist die Tatsache, daß mit der erfindungsgemäß vorgesehenen Ausbildung einer bestimmten Fördermenge $\dot{V}$ an der Stelle $R_K$ (Übergang von wasserführender Schicht in die Filterkiesschicht)

2

eine Strömungsgeschwindigkeit $V_K$ erreicht wird, die kleiner als die sogenannte Schleppgeschwindigkeit für kritische Sandpartikel ist (Schleppgeschwindigkeit: die kritische Strömungsgeschwindigkeit, bei der ein Sandkorn definierter Korngröße gerade bewegt wird). Wenn jedoch bereits an dieser Stelle die Strömungsgeschwindigkeit kleiner als die Schleppgeschwindigkeit für kritische Sandpartikel ist, liegt sie innerhalb der wasserführenden Schicht noch wesentlich weiter unterhalb der Schleppgeschwindigkeit, wie sich dies aus dem Kontinuitätssatz für Liniensenken ergibt. Sandpartikel kritischer Korngröße können somit nicht mehr mit der Strömung bewegt und von der Pumpe angesaugt werden.

Ein weiterer wesentlicher Vorteil resultiert aus dem mit der erfindungsgemäßen Vorrichtung erreichten gleichmäßigen Strömungsprofil an der Stelle $R_K$ und der damit verbundenen niedrigen mittleren Geschwindigkeit $iv_K$: Da die Strömungsverluste in der wasserführenden Schicht im wesentlichen maßgebend sind für die sogenannte Absenkung (Höhendifferenz $h_i$ zwischen Ruhe- und Betriebswasserspiegel im Bohrloch, Abb. 2) wird mit einer weiteren Reduzierung der über der Einzugslänge $L_E$ gemittelten Strömungsgeschwindigkeit $iv_K$ auch die Absenkung entsprechend vermindert. Daraus resultiert ein noch geringerer Energiebedarf zur Förderung des Wassers im Vergleich zur herkömmlichen SSS.

Bei der Transversalschlitzung läßt sich der Schlitzfaktor nach mehreren Möglichkeiten variieren: Über die Schlitzbreite (tangentiale Ausdehnung), die Schlitzhöhe (axiale Ausdehnung) und die Schlitzteilung (axiale Abstände der Schlitze zueinander). Bei der ersten Möglichkeit ergeben sich wegen des schwankenden Ovalitätsgrades der Rohre praktische Schwierigkeiten bezüglich der exakten Einhaltung der je Stufe definierten Schlitzbreiten und damit der definierten Durchtrittsflächen. Bei der zweiten Möglichkeit ist der fertigungstechnische Aufwand besonders hoch, weil die Höhe der Schlitze und damit die Dicke der zu verwendenden Sägeblätter von Stufe zu Stufe variiert. Die dritte Möglichkeit einer variablen Schlitzteilung ist die am wenigsten aufwendige Fertigungstechnik und daher den nachfolgenden Darlegungen zugrundegelegt.

In gleicher Weise läßt sich der Schlitzfaktor auch bei einer vom Effekt her identischen Longitudinalschlitzung variieren, der jedoch hinsichtlich der Feinabstufung des Schlitzfaktors eine natürliche Grenze durch die Schlitzbreite (hier axiale Ausdehnung) gesetzt ist.

Weitere Vorteile, Einzelheiten und Merkmale der Erfindung sind in der nachfolgenden Beschreibung eines Ausführungsbeispieles der Erfindung anhand der schematischen Zeichnungen näher erläutert:

Es zeigen:

Fig. 1 die Schnittansicht einer im Betrieb befindlichen herkömmlichen SSS,

Fig. 2 die Schnittansicht einer im Betrieb befindlichen erfindungsgemäßen SSS,

Fig. 3 den Funktionsverlauf des Schlitzfaktors $a_{(x)}$ und der Schlitzgeschwindigkeit $V_{SSS(x)}$ über der Einzugslänge $L_E$ und

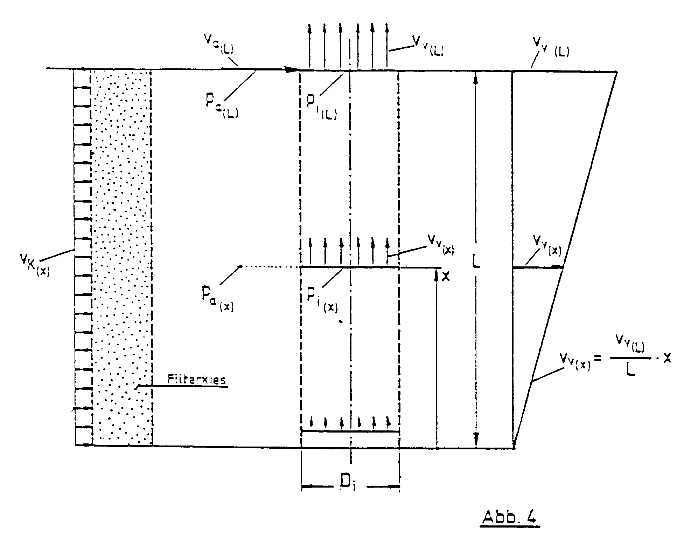

Fig. 4 die qualitative Darstellung der vertikalen Strömungsgeschwindigkeit innerhalb des Steuerungselementes über der Einzugslänge $L_E$ in Funktion von x.

Fig. 1 zeigt die über der Einzugslänge $L_E$ ungleichmäßige Strömungsverteilung in den Schlitzen des Steuerelementes, was zwangsläufig bei konstantem Schlitzfaktor über der Einzugslänge zu einer ebenfalls ungleichmäßigen Strömungsverteilung an der Stelle $R_K$ führen muß.

In Fig. 2 sind die Strömungsverhältnisse eines mit der erfindungsgemäßen Vorrichtung bestückten Brunnens dargestellt. Im Bereich der wasserführenden Schicht ist innerhalb eines mit einer Filterkiesschüttung 12 umgebenen Brunnenfilterrohres 11 das erfindungsgemäße Steuerelement 13 angeordnet.

Dieses weist eine Vielzahl von horizontalen Transversalschlitzen 14 auf, welche, als Kreissegmentschlitze in mehreren Reihen gleichmäßig über den Umfang des Steuerungselementes 13 verteilt. in dessen Wandung eingearbeitet sind. Die zwischen den Schlitzreihen verbleibenden vertikalen Wandungsstege gewährleisten die Gesamtstabilität des Steuerelementes 13. Alle Schlitzsegmente 14 haben die gleiche Breite, Länge und Höhe. Lediglich der Abstand benachbarter Schlitze in axialer Richtung nimmt von oben nach unten gemäß den im einzelnen noch dargelegten Berechnungen ab. Die Unterwasserpumpe 15 ist mit einem Vollrohr 16, an das sich das Steuerelement 13 nach unten anschließt, ummantelt und im Brunnenloch so angeordnet, daß die Pumpe sich auch bei maximaler Saugleistung stets unterhalb eines mit 17 bezeichneten Betriebswasserspiegels befindet. Dieser liegt um den Betrag der Absenkung h unterhalb des Ruhewasserspiegels 18.

Nachfolgend wird der strömungstechnische Effekt. der mit dem erfindungsgemäßen Gegenstand erzielt wird mathematisch hergeleitet. Gemäß den oben genannten Ausführungen fließt an jeder beliebigen Stelle x durch ein Flächenelement

$$\Delta A = \pi \cdot D_i \cdot \Delta x \quad (1)$$

die Teilmenge

$$\Delta \dot{V} = \Delta A \cdot a_{(x)} \cdot V_{SSS(x)} = const ; \quad (2)$$

Hierbei sind:

$D_i$: der Innendurchmesser des Steuerelementes 13 ;

$$a_{(x)} = \frac{\Delta A_{S(x)}}{\Delta A}$$

der über der Einzugslänge $L_E$ variable Schlitzfaktor;

$\Delta A_{S(x)}$ : die von x abhängige gesamte Schlitzfläche im Flächenelement $\Delta A$;

$V_{SSS(x)}$ : die über der Einzugslänge $L_E$ variable Strömungsgeschwindigkeit in den Schlitzen;

Bei der SSS gemäß DE-A-24 01 327 wurde über eine entsprechende Konstruktion der SSS-Wandung durch künstliche Strömungswiderstandserhöhung versucht, $V_{SSS(x)}$ über der Einzugslänge $L_E$ konstant zu machen. In diesem Falle konnte zur Erfüllung der Gleichung (2) auch $a_{(x)}$ über der Einzugslänge $L_E$ konstant gehalten werden. Im Rahmen der Erfindung durchgeführte Untersuchungen zeigten jedoch, daß die Bedingung $V_{SSS(x)}$ = const nur unzulänglich erfüllt wurde: Die Strömungsverluste in vertikaler Richtung im Innenrohr der SSS gemäß DE-A-24 01 327 sind keineswegs vernachlässigbar gegenüber den radialen Strömungswiderständen der SSS-Wandung, so daß entlang der einzelnen Strömungsfäden vom Eintritt des Wassers in die Schlitze der SSS bis zur Pumpe hin in Abhängigkeit von x unterschiedliche Strömungsverluste entstehen, die zwangläufig eine ungleichmäßige Anströmung der Steuerung bewirken.

Daraus folgernd ist somit der angestrebte Effekt nur durch eine variable Schlitzverteilung über der Einzugslänge $L_E$ zu erreichen. Diese läßt sich nur dann bestimmen, wenn die Strömungsgeschwindigkeit $V_{SSS(x)}$ bekannt ist. Nachfolgend wird diese daher berechnet: Nach dem Energiesatz gilt für die reibungsbehaftete Strömung

$$(1 - \zeta)Kv_{h(L)}^2 = p_{a(L)} - p_{i(L)} \quad (3)$$

Hierbei erfaßt $\zeta$ die Strömungswiderstände der Schlitze 14 in der Wandung des Steuerungselementes 13. $\zeta$ hängt von der Schlitzform und der Wandstärke des Steuerungselementes 13 ab und beträgt etwa 0.5 bei dünnwandigen Rohren. Die Konstante $K = \zeta/2g$ ist der Quotient aus dem spezifischen Gewicht des Wassers und der Erdbeschleunigung. $v_{h(L)}$ stellt die horizontale Zuströmgeschwindigkeit des Wassers im Schlitz an der Stelle $x = L$ dar. Die vertikale Position des Steuerungselementes 13 wird durch die laufende Koordinate x, die sogenannte Lauflänge wiedergegeben, wobei am unteren Ende des Steuerungselementes 13 $x = 0$ und am oberen, d. h. pumpennahen Ende der wirksamen Einzugslänge $L_E$ des Steuerungselementes 13 $x = L$ ist. $p_a$ bezeichnet den Druck außerhalb des Steuerungselementes 13 und $p_i$ den Druck innerhalb desselben.

Für die Drücke $p_{a(x)}$ und $p_{i(x)}$ gelten:

$$p_{a(x)} = p_{a(L)} + \gamma(L - x) \quad (4)$$
$$p_{i(x)} = p_{i(L)} + \gamma(L - x) + \Delta p_{v_{v(x)}} + \Delta p_{dyn_{v(x)}} \quad (5)$$

In diesen Gleichungen erfaßt $\gamma(L-x)$ den hydrostatischen Differenzdruck zwischen den Stellen L und x, $\Delta p_{v_{v(x)}}$ die Reibungsverluste der vertikalen Strömung in dem geschlitzten Rohr von x bis L und $\Delta p_{dyn_{v(x)}}$ die dynamische Druckdifferenz der vertikalen Strömung im geschlitzten Rohr infolge der Beschleunigung der Wasserströmung zum oberen Rohrende (x = L) hin.

Da die Gleichung (3) nicht nur für x = L, sondern für jedes beliebige x gilt, kann sie umgeschrieben werden als

$$(1 + \zeta)\frac{\gamma}{2\,g}\,V_h^2(x) = p_{a(L)} - p_{i(L)} - \Delta p_{dyn_{v(x)}} - \Delta p_{v_{v(x)}}$$

Unter nochmaligem Einsetzen der Gleichung (3) und nach Auflösen der sich dann ergebenden Gleichung nach $V_{h(x)}$ unter Berücksichtigung von $\zeta = 0,5$ ergibt sich für die horizontale Geschwindigkeit $V_{h(x)}$

$$V_{h(x)} = \sqrt{V_{h(L)}^2 - \frac{\Delta p_{v_{v(x)}} - \Delta p_{dyn_{v(x)}}}{1,5\,K}} \quad (6)$$

Zur Ermittlung der Verteilung der horizontalen Strömungsgeschwindigkeiten in den Schlitzen über der Einzugslänge müßten nun die Druckdifferenzen aufgrund der Reibungsverluste der vertikalen Strömung $\Delta p_{v_{v(x)}}$ im Inneren des Steuerungselementes und diejenigen der dynamischen Druckunterschiede $\Delta p_{dyn_{v(x)}}$ berechnet werden. Dies läßt sich jedoch in geschlossener Form nicht exakt darstellen, da ein Widerstandsbeiwert $\lambda$, der normalerweise für definierte Rohrströmungen und -Längen eine Konstante ist, im vorliegenden Fall von x und dem mit x veränderlichen vertikalen Volumenstrom im Inneren des Steuerungselementes 13 abhängig ist. Dies beruht darauf, daß einmal je Längenelement $\Delta x$ konstante Teilströme $\Delta \dot{V}$ in das Innere des Steuerungselementes 13 einströmen und zum andern die Intensität des durch die Schlitze 14 in das Innere des Steuerungselementes 13 eintretenden Wassers, dessen Strömungsimpulse Turbulenzen in der vertikalen Wasserströmung und damit eine scheinbare Wandrauhigkeit $\lambda$ erzeugen, über der Länge x veränderlich ist.

Demnach nehmen also die vertikalen Strömungsgeschwindikeiten im Inneren des Steuerungselementes 13 als auch die zu $\lambda$ proportionalen Reibungsverluste mit wachsendem x zu.

Langwierige Untersuchungen, die im Rahmen der Erfindung durchgeführt wurden, zeigten, daß $\lambda$ jeweils für eine Steuerelementgröße und eine bestimmte Fördermenge $\dot{V}$ experimentell bestimmt werden muß.

Durch Lösung entsprechender Ansätze und mehrmaliger Umformungen ergibt sich für

$$\Delta p_{v_{v(x)}} = \lambda \, \frac{K \cdot 16 \cdot \dot{V}^2}{\pi^2 \cdot D_i^5 \cdot 3 \, L^2} \, (L^3 - x^3) \quad (7)$$

Für $\Delta P_{dyn_{v(x)}}$ ergibt sich nach entsprechenden Umformungen

$$\Delta p_{dyn_{v(x)}} = \frac{K \cdot 16 \cdot \dot{V}^2}{\pi^2 \cdot D_i^4} \left[ 1 - \left( \frac{x}{L} \right)^2 \right] \quad (8)$$

Setzt man nun beispielsweise $\dot{V} = 0.07$ m³/s, $D = 0,25$ m und $L = 6$m, so zeigt sich, daß $\Delta P_{dyn_{v(x=0)}} \cong 2,1 \cdot \Delta P_{v_{v(x=0)}}$ ist, wenn für den über der Steuerelementlänge L gemittelten Widerstandsbeiwert $\lambda \cong 0,06$ eingesetzt wird.

Um eine optimale Strömungsverteilung zu erhalten, muß nun noch festgelegt werden, wie das Verhältnis b der horizontalen Strömungsgeschwindigkeiten $V_h$ an den Stellen $x = 0$ und $x = L$ sein soll. Im pumpennächsten Schlitz, d. h. bei $x = L$, ist die horizontale Strömungsgeschwindigkeit $v_{h(x=L)}$ eindeutig größer als im Schlitz am unteren Ende des Steuerungselementes bei $x = 0$, so daß $v_{h(x=0)} < v_{h(x=L)}$ ist und dementsprechend davon ausgegangen werden kann, daß $b < 1$ ist. Unter Verwendung von (7) und (8) ergibt sich daher für $x = 0$ aus der Gleichung (6)

$$v_{h,L} = \frac{4 \cdot \dot{V}}{\pi \cdot D_i^2} \sqrt{\left( \frac{\lambda \cdot L}{4,5 \, D_i} - 0,667 \right) \frac{1}{1 - b^2}} \quad (9)$$

Nachdem nun die Maximalgeschwindigkeit $v_{h(L)}$ bekannt ist, kann auch die Verteilung der horizontalen Strömungsgeschwindigkeiten $v_{h(x)}$ über der Lauflänge x dadurch bestimmt werden, daß die Gleichungen (7), (8) und (9) in die Gleichung (6) eingesetzt werden. Man erhält dann:

$$v_{h(x)} = \frac{4 \, \dot{V}}{\pi D_i^2} \sqrt{\frac{1}{1 - b^2} \left( \frac{\lambda \cdot L}{4,5 \, D_i} - 0,667 \right) - \frac{\lambda (L^3 - x^3)}{4,5 \, D_i \, L^2} - \frac{1 - \left( \frac{x}{L} \right)^2}{1,5}} \quad (10)$$

Nachfolgend soll nun die tatsächliche Schlitzverteilung berechnet werden. Wie zuvor erläutert wurde, besteht der Ansatz für die Verteilung der Schlitze 14 über die vertikale Lauflänge x darin, daß jedem Teilelement $\Delta x$ dieselbe Wassermenge $\Delta \dot{V}$ zuströmen soll. Bei der Bestimmung des Schlitzfaktors a(x) ist zu berücksichtigen, daß die hydraulisch wirksam werdende Durchströmfläche eines Schlitzes kleiner als die geometrische Schlitzfläche ist. Dies beruht auf dem Einschnürungseffekt des in den jeweiligen Schlitz 14 eintretenden Wasserstrahles und wird durch eine in die Gleichung eingehende Kontraktionszahl $\alpha$ berücksichtigt, die den Volumenstrom für ein betrachtetes Flächenelement entsprechend vermindert. Somit gilt

$$\Delta \dot{V} = \pi \cdot D_i \cdot \Delta x \, . \, v_{h(x)} \cdot a(x) \cdot \alpha \quad (11)$$

Da der Teilvolumenstrom für jedes betrachtete Flächenelement konstant sein soll, ergibt sich eine direkte Abhängigkeit des Schlitzfaktors von der horizontalen Strömungsgeschwindigkeit. Der Schlitzfaktor a(x) läßt sich nun für jedes betrachtete Flächenelement separat berechnen. Zum Beispiel beträgt bei einem Steuerungselement 13 mit einer wirksamen Einzugslänge $L_E$ von 3 m und 15 Stufen die entsprechende Stufenlänge $\Delta x$ = 0.2 m. Dann können die erforderlichen 15 verschiedenen Schlitzfaktorenwerte anhand der Gleichung (11) ohne weiteres bestimmt werden. Der i-te Schlitzfaktor beträgt dann nämlich

$$a_i = \frac{\Delta \dot{V}}{\alpha \cdot \pi \cdot D_i \cdot \Delta X \cdot v_{h(x)}} \quad (12)$$

In Fig. 3 sind sowohl das Schlitzgeschwindigkeitsprofil an der Stelle $D_i$ für die horizontale Strömungsgeschwindigkeit $v_{SSS(x)}$ als auch das Schlitzprofil über der Länge eines Steuerelementes 13 schematisch skizziert dargestellt, wie sie anhand der vorangehenden Gleichungssysteme berechnet werden können.

Der Deutlichkeit und leichteren Verständlichkeit halber sei hier nun ein Berechnungsbeispiel aufgeführt. Es sind folgende Werte vorgegeben:

$$\dot{V} = 0,06 \text{ m}^3/\text{s}$$
$$D_i = 0,192 \text{ m}$$
$$L = 6\text{m}$$

$$\lambda = 0,06$$

$$v_{h(L)} = 2,5 \text{ m/s}$$

Während der über $L_E$ gemittelte Widerstandsbeiwert mit $\lambda = 0,06$ angenommen wurde, entspricht der Wert für $v_{h(L)}$ in etwa dem experimentell ermittelten. Bei Auflösung von Gleichung (9) nach b und nach Einsetzen obiger Zahlenwerte ergibt sich

$$b = 0,506 \Rightarrow V_{h(x = 0)} = 1,265 \text{ m/s}$$

Die horizontale Schlitzströmungsgeschwindigkeit am unteren Ende ist daher etwa halb so groß wie die horizontale Strömungsgeschwindigkeit am oberen Ende des Steuerungselementes 13.

Gleichung (10) kann umgeschrieben werden zu

$$v_{h(x)} = A \sqrt{B - C(L^3 - x^3) - D\left(1 - \frac{x^2}{L^2}\right)} \; .$$

wobei die folgenden Abkürzungen eingeführt wurden:

$$A = \frac{4 \cdot \dot{V}}{\pi \cdot D_i^2}$$

$$B = \frac{1}{1 - b^2}\left(\frac{\lambda \cdot L}{4,5 \cdot D_i} + 0,667\right)$$

$$C = \frac{\lambda}{4,5 \cdot D_i L^2}$$

$$D = \frac{1}{1,5} = 0,667$$

Nach dem Einsetzen der Werte des Zahlenbeispiels ergibt sich A = 2,072; B = 1,454; C = 0,00193. Damit läßt sich im vorliegenden Zahlenbeispiel $V_h$ als Funktion der Lauflänge x in geschlossener Form für jedes beliebige x berechnen.

Um nun zum Schlitzprofil zu gelangen, muß die Stufenlänge $\Delta x$ jedes Berechnungsabschnittes festgelegt werden. Zwar könnte auch jede beliebig kleinere Abstufung gewählt werden, jedoch ist es im vorliegenden Beispiel angebracht, $\Delta x = 0,4$ m zu wählen, so daß L = 15 $\cdot \Delta x$ = 6 m ist. Für die Wassermenge $\Delta \dot{V}$, die je Stufe angesaugt werden soll, gilt dann

$$\Delta \dot{V} = 0,06/15 = 0,004 \text{ m}^3/\text{s}$$

Gleichung (12) für den Schlitzfaktor der i-ten Stufe kann nun in der folgenden Weise umgeschrieben werden:

$$a_i = E \cdot \frac{1}{v_{h(x_i)}}$$

wobei für $\alpha \simeq 0,6$ (rechteckiger Einlauf siehe Fachliteratur)

$$E = \frac{\Delta \dot{V}}{\pi \cdot D_i \cdot \Delta x \cdot \alpha}$$

ist und im vorliegenden Beispiel beträgt E = 0,0276 m/s.

Aus Festigkeitsgründen sind - wie weiter oben erläutert wurde - die einzelnen Schlitze in mehrere in vertikalen Reihen angeordnete Kreissegmentschlitze symmetrisch aufgeteilt, zwischen denen sich jeweils feste Stege als Teil der Wandung des Steuerungselementes 13 erstrecken. Die Fläche eines Schlitzes $A_{s_{(i)}}$ läßt sich daher ausdrücken als

$$A_{s_{(i)}} = \beta \cdot \pi \cdot D_i \cdot s$$

wobei s die Schlitzhöhe darstellt und im vorliegenden Zahlenbeispiel mit s = 1 mm gewählt wird. $\beta$ ist das Verhältnis aus der Gesamtlänge aller auf einer Höhe x befindlichen Kreissegmentschlitze zum Umfang des Steuerungselementes und wird hier mit 0,6 angesetzt. Damit ergeben sich

$$A_{s_{(i)}} = 0,000362 \text{ m}^2$$

und die Anzahl Z der Schlitze - nicht zur verwechseln mit der Anzahl der Kreissegmentschlitze - je Oberfläche einer Stufenlänge $\Delta x$ mit

$$Z = \frac{a_{(x)}}{A_{s_{(i)}}}\left[\frac{\text{Anzahl}}{\text{m}^2}\right]$$

Das für das vorstehende Zahlenbeispiel errechnete Schlitzbild ist in nachfolgender Tabelle ersichtlich.

| $x$ | $V_{h}(x)$ | $a(x) = \dfrac{E}{V_{h}(x)}$ | $Z = \dfrac{a(x)}{A_{S(1)}}$ | |
|---|---|---|---|---|
| 0,2 | 1,25 | 0,0217 | 60,5 | – unten |
| 0,6 | 1,2726 | 0,0217 | 60 | |
| 1,0 | 1,273 | 0,0213 | 58 | |
| 1,4 | 1,3295 | 0,021 | 56 | |
| 1,8 | 1,377 | 0,02 | 55 | |
| 2,2 | 1,436 | 0,0192 | 53 | |
| 2,6 | 1,5074 | 0,0183 | 50,5 | |
| 3,0 | 1,55 | 0,0174 | 48 | |
| 3,4 | 1,6535 | 0,0164 | 45 | |
| 3,8 | 1,787 | 0,0155 | 43 | |
| 4,2 | 1,9 | 0,0145 | 40 | |
| 4,6 | 2,02 | 0,0137 | 38 | |
| 5,0 | 2,15 | 0,013 | 36 | |
| 5,4 | 2,28 | 0,0121 | 33,5 | |
| 5,8 | 2,43 | 0,0114 | 31,5 | – oben |

Vorzugsweise werden 4 bis 6 Schlitzreihen von Kreissegmentschlitzen über den Umfang verteilt angeordnet.

Die neuentwickelte Vorrichtung ist in ähnlicher Weise und mit ähnlichem Effekt auch direkt auf Brunnenfilterrohre anwendbar : Anstelle eines herkömmlichen Brunnenfilterrrohres wird das Bohrloch im Bereich der wasserführenden Schichten mit einem geschlitzten Rohr der neuen Ausführungsart ausgekleidet, d. h. die Wasserdurchtrittsfläche nimmt bei diesem Brunnenfilterrohr im infragekommenden Bereich von oben nach unten definiert zu. In diesem Fall ist der Brunnenausbau völlig konventionell, d. h. um das neuartige Brunnenfilterrohr wird in der herkömmlichen Weise Filterkies gepackt, nach oben hin schließt sich an das neuartige Brunnenfilterrohr ein Brunnenvollrohr herkömmlicher Ausführung an und die Tauchpumpe wird ohne SSS-Bestückung so eingebaut, daß ihre Unterkante genau in der Ebene der Nahtstelle zwischen Brunnenvoll- und -filterrohr liegt. Das angestrebte gleichmäßige Stömungsprofil wird ebenfalls schon an der Übergangsstelle $R_k$ vom Aquifer, also von der wasserführenden Schichten, zur Kiesschüttung vorliegen.

Gemäß einer weiteren vorteilhaften Ausgestaltung der Erfindung ist ein zusätzliches Außenrohr vorgesehen, das das Steuerungselement 13 umgibt. Das Außenrohr weist eine Vielzahl von relativ großflächigen Schlitzen auf, so daß die relative Wasserdurchtrittsfläche des Außenrohrs erheblich größer als diejenige des Steuerungselementes 13 ist. Als besonders geeignet hat sich ein Verhältnis von 10 bis 15 : 1 bei den relativen Wasserdurchtrittsflächen von Außenrohr und Steuerungselement herausgestellt.

Mit diesem zusätzlichen Außenrohr kann die Wasserströmung im Bereich des Brunnenfilterrohres noch besser vergleichmäßigt werden, so daß sich eine der laminaren Strömung noch näherkommende Strömung einstellt.

## Patentansprüche

1. Vorrichtung zur Entnahme von sandfreiem Wasser aus einem konventionell ausgebauten Bohrbrunnen, bestehend aus einer Unterwasserpumpe (15), einem über eine definierte Einzugslänge ($L_E$) uniform perforierten Brunnenfilterrohr (11) und einer das Brunnenfilterrohr (11) umgebenden Schicht (12), über welche Wasser aus einer wasserführenden Schicht ansaugbar ist, wobei die Zuströmgeschwindigkeit $V_{h(L)}$ des Wassers auf seinem Weg durch die Schicht (12) und das Brunnenfilterrohr (11) über die gesamte Einzugslänge ($L_E$) mittels eines Steuerelements (13) horizontal und konstant gehalten wird, wozu im Steuerelement (13) über die Einzugslänge ($L_E$) von oben nach unten zunehmende Wasserdurchtrittsflächen vorgesehen sind, dadurch gekennzeichnet, daß

– die Einzugslänge ($L_E$) des Steuerelements (13) in Teilstücke ($\Delta x$) eingeteilt ist, die jeweils eine unterschiedlich große Wasserdurchtrittsfläche aufweisen;

– jedes Teilstück ($\Delta x$) durch eine uniforme Perforation mit seiner Wasserdurchtrittsfläche versehen ist;

– in allen Teilstücken (Δx) das jeweilige Produkt aus der Wasserdurchtrittsfläche und der mittleren Durchströmgeschwindigkeit $V_{h(x)}$ gleich groß ist.

2. Vorrichtung nach Anspruch 1, dadurch gekennzeichnet, daß die Teilstückelt des Steuerungselements (13) als dünnwandige Einzelrohre ausgebildet sind, deren Stärke zwischen 1 mm und 30 mm, bevorzugt zwischen 2 mm und 20 mm, liegt.

3. Vorrichtung nach Anspruch 1 oder 2, dadurch gekennzeichnet, daß der Durchmesser (Di) des Steuerelements (13) zur Verminderung der inneren axialen Strömungsverluste relativ groß ausgebildet ist und zwischen 2,5 cm und 95 cm, bevorzugt zwischen 4 cm und 80 cm, liegt.

4. Vorrichtung nach einem der Ansprüche 1 bis 3, dadurch gekennzeichnet, daß ein zusätzliches koaxial mit dem Steuerelement (13) angeordnetes Außenrohr vorgesehen ist, das das Steuerelement (13) umgibt und eine Vielzahl von relativ großflächigen Schlitzen aufweist, so daß die relative Wasserdurchtrittsfläche des Außenrohrs erheblich größer ist als diejenige des Steuerelementes und bevorzugt ein Verhältnis von 10 bis 15 : 1 aufweist.


## Claims

1. Apparatus for extracting sand-free water from a conventionally constructed borehole well, comprising a submerged pump (15), a well filter pipe (11), uniformly perforated over a defined catchment length ($L_E$), and a layer (12) surrounding the well filter pipe (11), via which layer water can be induced from a water-bearing stratum, the incident flow velocity $V_{h(L)}$ of the water being kept horizontal and constant on its way through the layer (12) and the well filter pipe (11) over the complete catchment length ($L_E$) by means of a control element (13), for which purpose water passage areas which increase over the catchment length ($L_E$) from the top to the bottom are provided in the control element (13), characterised in that
– the catchment length ($L_E$) of the control element (13) is subdivided into parts (Δx) which in each case have a water passage area of a different size;
– each part (Δx) is provided with its water passage area by a uniform perforation;
– in all parts (Δx), the respective products of the water passage area and the average through-flow velocity $V_{h(x)}$ is of the same magnitude.

2. Device according to Claim 1, characterised in that the parts of the control element (13) are designed as thin-walled single pipes, the thickness of which is between 1 mm and 30 mm, preferably between 2 mm and 20 mm.

3. Device according to Claim 1 or 2, characterised in that the diameter (Di) of the control element (13) is designed to be relatively large in order to reduce the internal axial flow losses and is between 2.5 cm and 95 cm, preferably between 4 cm and 80 cm.

4. Device according to one of Claims 1 to 3, characterised in that an additional external pipe is provided, this external pipe surrounding the control element (13) coaxially and having a multiplicity of relatively large-area slots so that the relative water passage area of the external pipe is substantially larger than that of the control element and preferably has a ratio of between 10 and 15 to 1.


## Revendications

1. Dispositif pour prélever de l'eau exempte de sable d'un puits de forage de type classique comprenant, une pompe immergée (15), un tube filtrant (11) pour puits avec des perforations uniformes sur une longueur d'alimentation définie ($L_E$), et une couche (12) entourant ce tube (11), à travers de laquelle de l'eau peut être aspirée d'une nappe aquifère de façon à ce que la vitesse d'adduction ($V_{h(L)}$) de l'eau aspirée est maintenue constante et horizontale sur son trajet à travers la couche (12) et le tube filtrant pour puits (11) sur toute la longueur d'alimentation ($L_E$) moyenant un élément de réglage (13) avec des surfaces de passage pour l'eau qui augmentent du haut vers le bas sur toute la longueur d'alimentation ($L_E$) caractérisé en ce que
– la longueur d'alimentation ($L_E$) de l'élément de réglage (13) est divisée en tronçons (Δx) qui présentent chacune une surface de passage d'eau différente;
– chaque tronçon (Δx) dispose d'une surface de passage d'eau obtenu par une perforation uniforme;
– dans chaque tronçon (Δx) le produit entre la surface de passage d'eau et la vitesse moyenne de passage d'eau $V_{h(x)}$ est de valeur égale.

2. Dispositif selon la revendication 1, caractérisé en ce que les tronçons (Δx) de l'élément de réglage (13) sont constitués sous forme de tube simple à parois minces dont l'épaisseur est comprise entre 1 mm et 30 mm et, de préférence, entre 2 mm et 20 mm.

3. Dispositif selon les revendications 1 ou 2, caractérisé en ce que le diamètre (Di) de l'élement de réglage (13) pour diminuer les pertes par écoulement axial intérieur est dimensionné relativement grand et est compris entre 2,5 cm et 95 cm et, de préférence, entre 4 cm et 80 cm.

4. Dispositif selon l'une des revendications 1 à 3, caractérisé en ce qu'un tube extérieur supplémentaire est disposé coaxialement par rapport à l'élément de réglage (13) et entoure cet élément de réglage (13) en présentant un grand nombre de fentes de surface relativement grandes si bien que la surface de passage relative de l'eau du tube extérieur est beaucoup plus grande que celle de l'élément de réglage, le rapport correspondant étant, de préférence, de 10 à 15 : 1.

SSS

$L_E$

$v_{K_{(x)}} \neq$ const.

↕ x

Filterrohr

Filterkies

$v_{SSS_{(x)}} \neq$ const.

$D_{SSS}$

$R_K$

<u>Abb. 1</u>

$\Delta x \cdot a_{(x)} \cdot v_{SSS_{(x)}} =$ const.

$a_{(x)} = f_{(x)}$

$v_{SSS_{(x)}} = f_{(x)}$

$L_E$

x

<u>Abb. 3</u>

Abb. 2

$$Abb. 4$$